# EUROPEAN PATENT APPLICATION

(11) **EP 2 765 082 A1**
(43) Date of publication of application: **13.08.2014**
(21) Application number: 13154590.7
(22) Date of filing: 08.02.2013
(51) Int. Cl.: B65B 25/00, B65B 9/04, B65D 85/60, B65D 75/32

(54) **Lollipop with a deep drawn package**

(71) Applicant: GEA Food Solutions Weert B.V., 6006 RV Weert (NL)
(72) Inventor: Baumeister, Bruno Gerfried, 52078 Aachen (DE)
(74) Representative: Wolff, Felix

(57) **Abstract**

The present invention relates to a packaged lollipop (1), wherein the lollipop comprises an eatable lollipop head (2) and a stick (3) and wherein at least the lollipop head (2) is packaged.

The present invention also relates to method to package a lollipop and a packaging machine which packages a lollipop.

## Description

The present invention relates to a packaged lollipop, wherein the lollipop comprises an eatable lollipop head and a stick and wherein at least the lollipop head is packaged.

Such packaged lollipops are well known in the state of the art and are usually wrapped in a film, which is twisted, wherein the twisted part is sealed together. Such lollipops are for example known as single or double twist lollipops. It is also known to wrap lollipop between a folded film layer, which is sealed together around the circumference of the lollipop head. Both wrappings have the disadvantage, that the shape of the lollipop head, which is covered by the packaging material, cannot be determined by the user.

It was therefore the problem of the present invention to provide a packaged lollipop, which overcomes the deficiencies according to the state of the art.

This problem is solved by a packaged lollipop, wherein the lollipop comprises an eatable lollipop head and a stick and wherein at least the lollipop head is packaged, wherein the package comprises a lower and an upper layer, wherein at least one layer comprises a deep drawn recess, which, at least partially, takes up the lollipop head.

The disclosure regarding the packaged lollipop also applies to the inventive method and/or the inventive packaging machine and vice versa.

The present invention relates to a packaged lollipop. This lollipop comprises an eatable lollipop head and a stick, which is inserted into the lollipop head. According to the present invention, at least this lollipop head is packaged between a lower and an upper layer, wherein at least one layer comprises a deep drawn recess, which, at least partially, takes up the lollipop head. The deep drawn recess is produced prior to inserting the lollipop head into the recess. The deep drawn recess is not produced by the lollipop head itself. After the lollipop head has been placed in the recess, the two layers are sealed together, preferably under the influence of an increased temperature and/or an increased pressure. Subsequently, the packaged lollipop is cut out of the layers by cutting means.

Preferably, the shape of the recess is at least partially congruent with the shape of the lollipop head. This preferred embodiment allows a user to recognize the shape of the lollipop head by the shape of the package.

The layers are preferably plastic films, which can be sealed together. Each layer is preferably provided on a roll and is, during production unwound from this roll. Prior to the deep drawing, one or both films are preferably heat, more preferably to their plastification temperature. The deep drawing can be carried out by the application of a vacuum and/or by means of a stamp. The sealing of the two film preferably takes place under the influence of heat and/or pressure.

In a preferred embodiment, the package, at least partially, surrounds the stick of the lollipop and even more preferably, the sealing area in which the two layers are sealed together at least partially extends around the stick. This preferred embodiment of the present invention is more hygienic than lollipops according to the state of the art, particularly in case the package surrounds the lollipop head and the lollipop stick entirely, because the package isolates the lollipop entirely from influences from the ambient. However, the stick may also extend out of the sealing area. This preferred embodiment of the present invention has the advantage that the stick can be held by holding means, for example a gripper, during the sealing of the two layers.

In a preferred embodiment, the package comprises, besides the lollipop head a second item, for example a chewing gum. More preferably, the package comprises a second compartment, which preferably accommodates the second item.

Preferably, at least one of the lower and the upper layer is attached, preferably sealed to the stick of the lollipop. This preferred embodiment has the advantage, that the lollipop head can be at least partially isolated from influences from the ambient, so that this preferred embodiment of the packaged lollipop is more hygienic than packaged lollipops according to the state of the art. Preferably, the stick is coated with a heat-sealable plastic material.

In a preferred embodiment, the package of the lollipop comprises an opening area, in which the two layers are preferably not or peelably sealed together.

The inventive lollipop package is opened by gripping each layer with one hand and pulling the two layers apart.

Another embodiment of the present invention is a method to package a lollipop, wherein a lower layer and an upper layer are provided, which are moved towards a sealing station, and wherein at least one recess is deep drawn into one of these layers by deep drawing means, and wherein the stick of the lollipop is attached to transportation means which transports the lollipop towards the sealing station and insert the lollipop head and/or the stick into the recess, at least partially, and wherein the two layers are sealed together, at least around the lollipop head in the sealing station and wherein the packaged lollipops are detached by cutting means.

The disclosure made regarding the inventive packaged lollipop also applies to inventive method and the inventive packaging machine and vice versa.

The two layers are preferably provided as webs, which are transported continuously or intermittently along a packaging machine. During this transportation, at least a recess per lollipop is deep drawn into at least one of the lower- and/or upper-layer by deep drawing means. Such deep drawing means can be for example a roll, preferably a heated roll, which comprises multitude of cavities, into which the respective layer is drawn to form a recess. Prior or during the deep drawing, the layer is preferably heated, more preferably heated to its plastification temperature. In case, only one layer comprises a recess, preferably the lower layer comprises the recess, so that each lollipop can be dropped into the recess by gravity and/or after their release from their transportation means the lollipop remains in the recess by gravity.

Furthermore, the stick of the lollipop is attached to transportation means, which, for example, comprises a multitude of grippers, which are, e.g. attached to a moving chain, which grip the stick of the lollipop and transport the lollipop towards the sealing station and preferably beyond the sealing station until the packaged lollipops are cut out of the two packaging layers. In the sealing station or prior to the sealing station, at least the lollipop head and/or the stick is placed, preferably dropped, into the deep drawn recess. In case the entire lollipop is placed into a recess, the lollipop is released from their transportation means during this placement. Subsequently, the two layers are sealed together, preferably under the influence of heat and/or pressure or by a glue, wherein the sealing area extends at least around the lollipop head and/or at least partially, around the stick of the lollipop. Finally, the packaged lollipops are detached by cutting means and then transported away.

Preferably, at least one of the layers is transported by the movement of the lollipop. After the head of the lollipop and/or its stick is placed into the recess, there is at least a partial form fit between the lollipop and the respective layer, which can be utilized to transfer the movement of the lollipop to the upper and/or lower packaging layer and thus transport one or both of these layers through the packaging machine.

In another preferred embodiment, the lower- and/or upper-layer are transported by transportation means through the packaging machine. These transportation means can be for example one or a multitude of chains, with grippers, which grip the film and move it through the packaging machine. Preferably, only the lower layer is transported by transportation means and this movement of the low film is transferred to the upper layer after the two layers have been sealed together. In case the lower film is transported by transportation means, the lollipop is preferably released from its transportation means, after the lollipop has been inserted into the recess, preferably the recess in the lower film.

Preferably, additionally to the head of the lollipop, a second item, for example a chewing gum, is inserted into the recess. More preferably, the second item is inserted into the recess prior to the lollipop. The second item is also transported by transportation means, which are preferably located upstream from the sealing station and upstream from the insertion point of the lollipop head into recess and place each second item into a recess. During the deep drawing, a separate compartment is preferably formed into one of the layers, preferably the lower layer.

Another embodiment of the present invention is a packaging machine, which packages a lollipop between a lower and an upper layer, with a sealing station, which seals the two layers together, wherein it comprises deep drawing means which form a recess into at least one of the layers, cutting means which detach the packaged lollipops and transportation means, which transport the lollipop towards the sealing station and insert the lollipop head into the recess prior to and/or in the sealing station.

The disclosure made regarding the packaged lollipop, the inventive method also applies to the inventive packaging machine and vice versa.

The lollipop is preferably inserted into the recess prior to the sealing station.

Preferably, the deep drawing means is preferably a roll with cavities which can be exposed to a vacuum which draws the respective recess into the layer.

The distance between two recesses in the layer and the distance at which the lollipops are transported towards the sealing station is preferably at least essentially equal.

The inventions are now explained according to figure 1 to 8. These explanations do not limit the scope of protection and apply to all inventions, respectively.
Figures 1 to 5 show embodiments of the inventive packaged lollipop.
Figures 6 to 8 show embodiments of the inventive method and the inventive packaging machine.

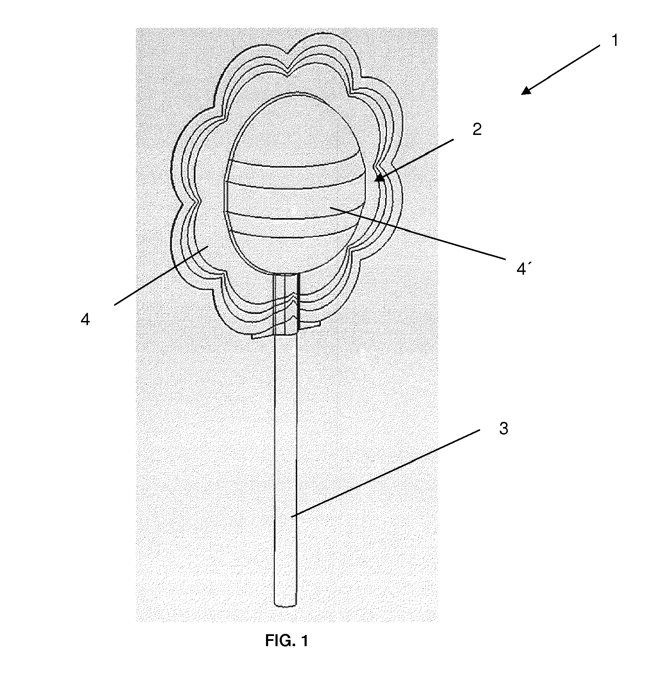

Figure 1 shows the packaged lollipop 1. This lollipop comprises an eatable lollipop head, which is, for example, made from a sugar mass, into which a stick 3 is inserted. According to the present invention, the lollipop head 2 and partially the stick 3 are packaged into a package, which comprises two layers of packaging material, preferably a plastic packaging material, which is preferably transparent. These two packaging layers are sealed together around the circumference of the lollipop head and into at least one of the layers a recess 4' is deep drawn. In the present case, the lollipop head is sphere-shaped and a half-sphere recess has been deep drawn into each of the packaging layers. Due to this half-sphere shape of the recesses, the package is at least partially congruent with the packaged lollipop head, so that the user can recognize from the shape of the recess the shape of the lollipop head. After the lollipop has been inserted into the recess, the two layers are sealed together around the circumference of the recess and in the present case also partially around the stick. The sealing can be carried out such, that at least one, preferably both of the layers also form a material bond with the stick, so that the lollipop head is entirely isolated from the ambient. Subsequently, each lollipop is detached from the two layers by cutting means. The contour of the cut can be freely chosen and is in the present case flower like.

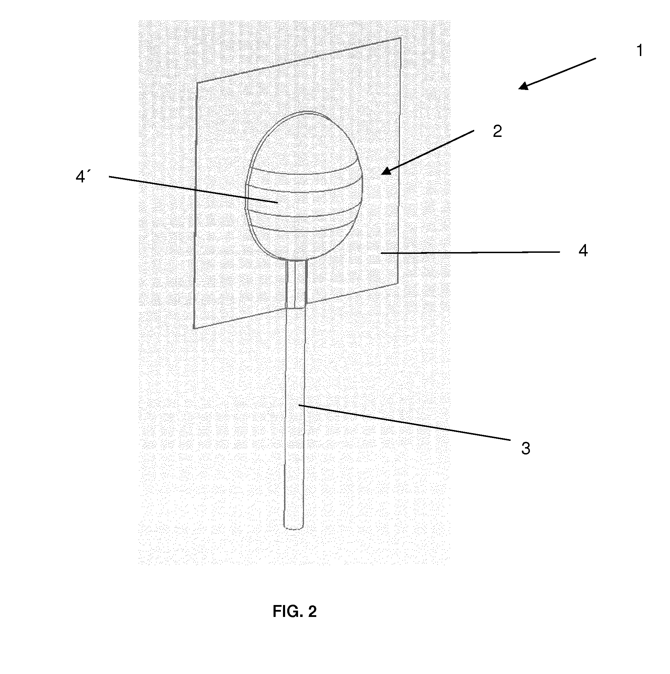

Figure 2 essentially shows the embodiment according to figure 1, wherein, in the present case, the contour of the cut is straight.

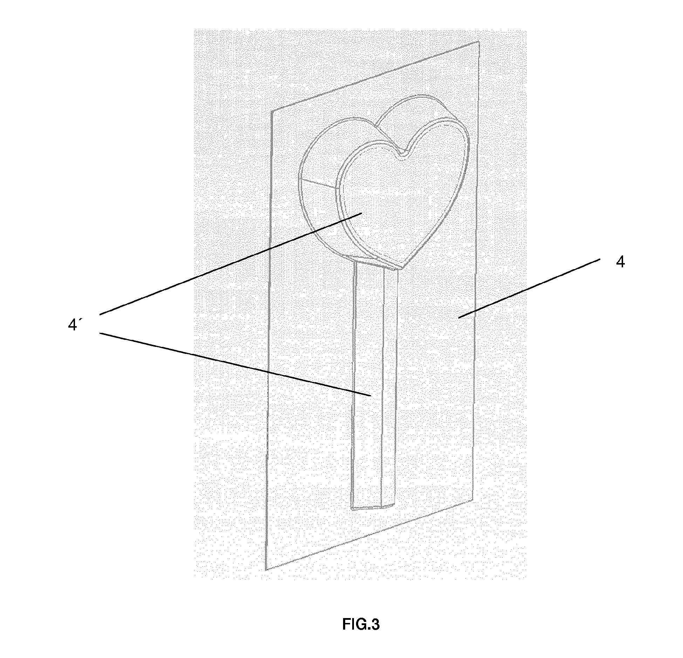

Figure 3 shows an embodiment of the packaged lollipop, wherein the entire lollipop; i.e. the lollipop head and the stick are entirely inserted into the packaging recess, which is deep drawn prior to packaging the lollipop. In the present case, the head of the lollipop is heart shaped. Consequently, the recess for the lollipop head is heart shaped as well. In the present case only one layer is deep drawn, while the other layer remains flat. However, the person skilled in the art understands, that even in the present case, both layers can be deep drawn. The sealing area extends in the present case around the lollipop head and around the entire lollipop stick.

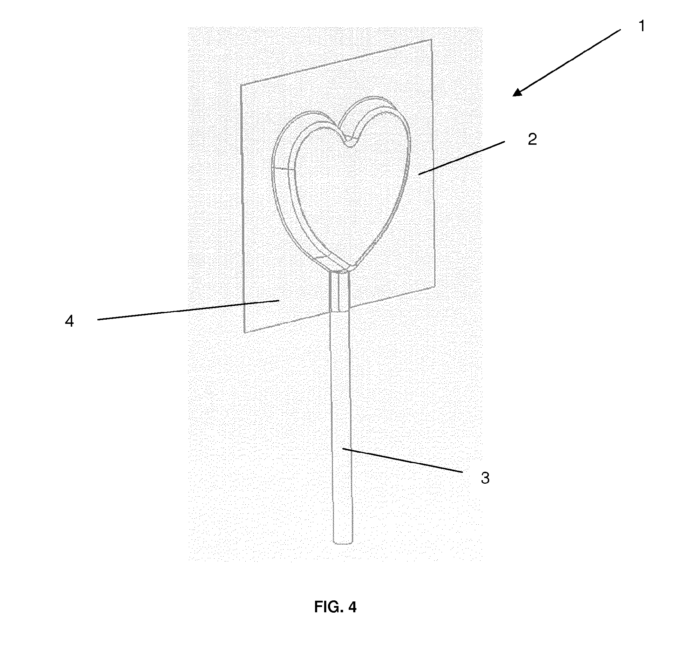

Figure 4 shows the embodiment according to figure 3, wherein, in the present case, the stick of the lollipop is only partially inserted into the recess 4'. Other than that reference can be made to figures 1 to 3.

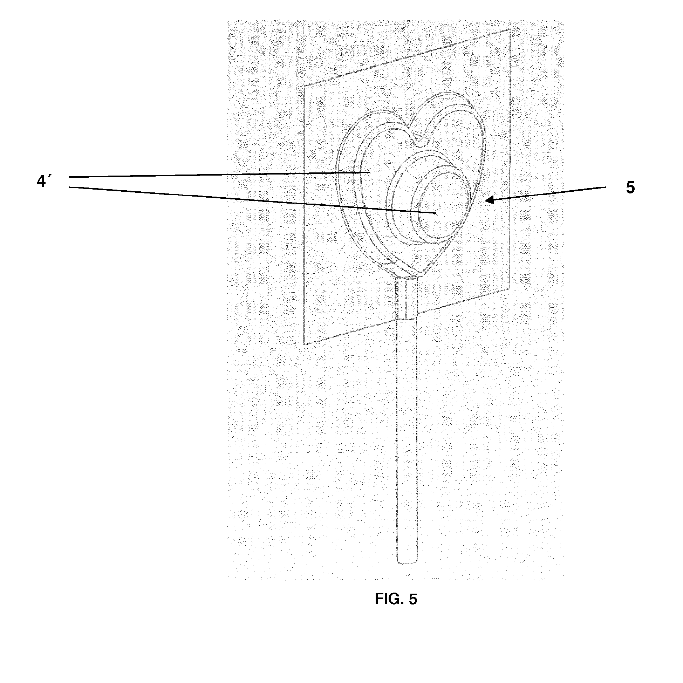

Figure 5 shows an embodiment of the packaged lollipop, in which a second item 5, for example a chewing gum, is also inserted into the recess in one packaging layer. In the present case, the recess preferably comprises a second compartment, which is preferably at least partially congruent to the shape of the second item. The second item is preferably placed into the recess prior to the insertion of the lollipop head into the recess. Subsequently, the upper and the lower film are sealed together and the resulting package is detached from the two layers.

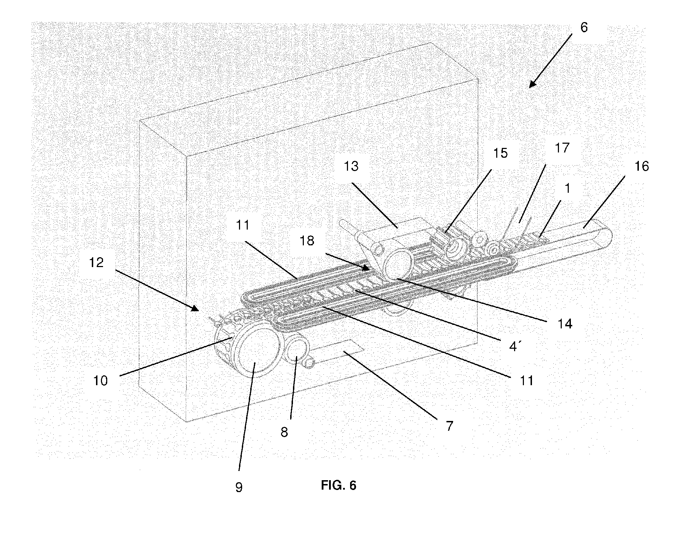

Figure 6 shows the inventive packaging machine, which comprises transportation means 11 for the lollipops, deep drawing means 9 for the lower layer 7, sealing means 14, which seal the upper film 13 to the lower film 7 and cutting means 15, which detach the packaged lollipops from the upper and the lower layer. Furthermore, the packaging machine may comprise transportation means 11, which move the lower layer 7 and/or the upper layer 13 along the packaging machine. This transportation means for one of the layers 7, 13 can be for example an endless chain provided with film grippers, which grip the film at at least one of its sides and transport it continuously or intermittently along the packaging machine. The lower web is for example provided on a roll and firstly moved via heating means 8, here a heating roll, to deep drawing station 9, in the present case a deep drawing roll 9, which comprises a multitude of cavities 10 at its circumference, which can be each, preferably individually connected to a vacuum, which draws the heated film, which is preferably heated to its plastification temperature into the cavities and thus forms the deep drawn recess 4'. In the present case, the recess is accommodates the stick of the lollipop as well. Subsequently, the head of a lollipop and here also the stick is placed into a recess 4' by transportation means 11 for the lollipop. These transportation means for the lollipop is for example an endless chain with one gripper per lollipop, which grips the stick of the lollipop. The insertion of the lollipop into the recess 4' takes place prior to the sealing means 14, in the present case two sealing roles, which are heated and/or pressed against each other and seal the upper layer to the lower layer together and thus closes the package. The upper film, which is preferably also made from a plastic material, is preferably also provided on a roll (not depicted). Downstream from the sealing station 14, the packaging machine comprises cutting means 15, in the present case two cutting wheels, which are placed on top and below the two layers 7, 13 and which cooperate as a knife and a counter knife and thus, detach the packaged lollipops from the two layers around a contour or a straight line. The cut can be a so called contour cut, which cuts the packaging head out of the two layers and leaves a waste material 17, which is preferably rolled up and/or cut apart. Subsequently, the individual packaged lollipops are transported away by transportation means 16.

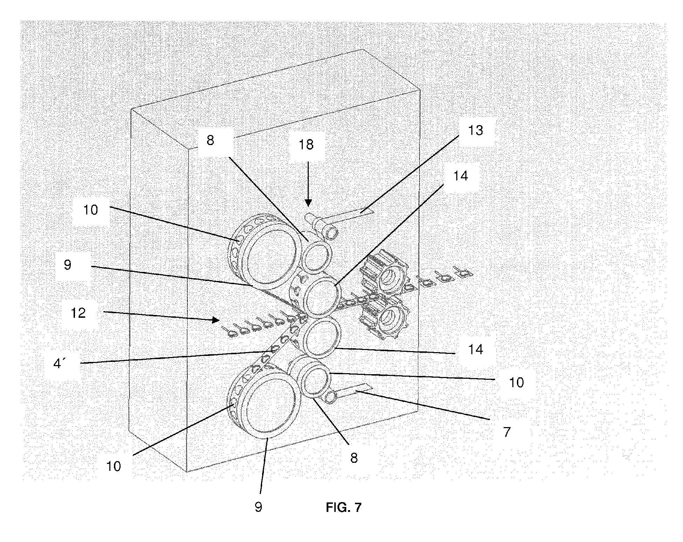

Figure 7 shows schematically another embodiment of the present invention. In principle, reference can be made to the disclosure regarding figure 6, however, in the present case, a recess 4' is formed into the lower film 7 and into the upper film 13. Consequently, the packaging machine according to this embodiment of the present invention comprises two forming means 9. Furthermore, in the present case, the packaging machine comprises no transportation means for the lower- and upper-layer 7, 13, but these two layers are transported along the packaging machine by the movement of the lollipops 12. As soon as the lollipop heads have been placed into the recess 4', their movement is transferred to the films 7, 13, which are drawn along the packaging machine. The person skilled in the art understands that it is also possible the layers 7, 13 by means of the movement of the lollipops, in case that there is only one recess 4'in one layer 7, 13.

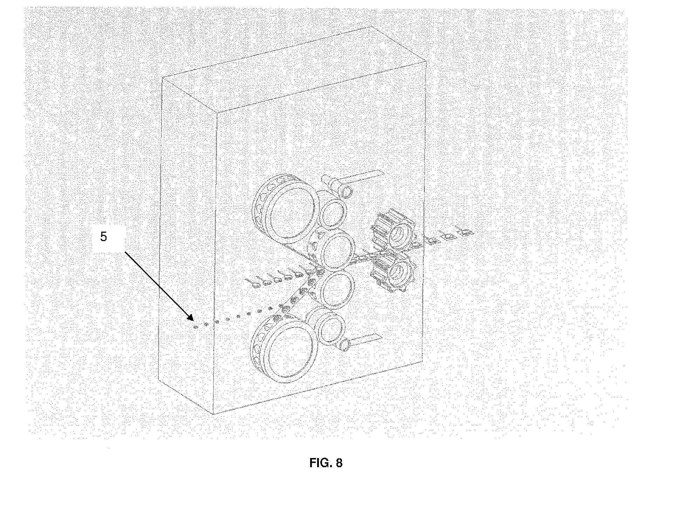

Figure 8 shows yet another embodiment of the inventive packaging machine, wherein reference is made to the disclosure regarding figure 7. In the present case, the packaging machine comprises additional transportation means, which insert a second item 5 into the recess of the lower film 7. Differently to the packaging machine according to figure 7, in the present case, a second compartment is deep drawn into the lower film 7, which accommodates the second item and which is preferably at least essentially congruent with the second item 5. The second item is preferably placed into the recess upstream from the insertion of the lollipop head into the recess.

### List of reference signs:

- 1: packaged lollipop
- 2: lollipop head
- 3: stick
- 4: package of the lollipop head or the entire lollipop
- 4': deep drawn packaging recess
- 5: additional item in the package
- 6: packaging machine
- 7: lower film web, lower layer
- 8: heating of the lower web
- 9: deep drawing means, deep drawing roll
- 10: cavities
- 11: transportation means for the lollipops 12 and/or the lower film web 7
- 12: lollipop to be packaged
- 13: upper film web, upper layer
- 14: sealing means, sealing roll
- 15: cutting means
- 16: transportation means for the singled lollipops
- 17: waste packaging material
- 18: sealing station

## Claims

1. Packaged lollipop (1), wherein the lollipop (12) comprises an eatable lollipop head (2) and a stick (3) and wherein at least the lollipop head (2) is packaged, **characterized in, that** the package (4) comprises a lower and an upper layer (7, 13), wherein at least one layer (7, 13) comprises a deep drawn recess (4') per lollipop, which, at least partially, takes up the lollipop head (2).

2. Packaged lollipop (1) according to claim 1, **characterized in, that** the shape of the recess (4') is at least partially congruent with the shape of the lollipop head (2).

3. Packaged lollipop (1) according to one of the preceding claims, **characterized in, that** the package (4), at least partially, surrounds the stick (3) of the lollipop.

4. Packaged lollipop (1) according to one of the preceding claims, **characterized in, that** the two layers are sealed together.

5. Packed lollipop (1) according to one of the preceding claims, **characterized in, that** the package 4 comprises a second, separate item (5).

6. Packaged lollipop (1) according to claim 5, **characterized in, that** the package comprises a second compartment, which accommodates the second item (5).

7. Packaged lollipop (1) according to one of the preceding claims, **characterized in, that** at least one layer (7, 13) is attached, preferably sealed, to the stick (3) of the lollipop.

8. Packaged lollipop (1) according to one of the preceding claims, **characterized in, that** the package comprises an opening area.

9. Method to package a lollipop, wherein:
- a lower layer (7) and an upper layer (13) are provided, which move towards a sealing station (18),
- at least one recess (4') is deep drawn into one of these layers (7, 13) by deep drawing means (9),
- the stick (3) of the lollipop (12) is attached to transportation means (11) which transport the lollipop towards the sealing station (18) and insert the lollipop head (2) and/or the stick (3), at least partially, into the recess (4'),
- the two layers (7, 13) are sealed together, at least around the lollipop head (2) in the sealing station and
- the packaged lollipops (1) are detached by cutting means (15).

10. Method according to claim 9, **characterized in, that** at least one layer (7, 13) is transported by the movement of the lollipops (12).

11. Method according to claim 9, **characterized in, that** the lower- and/or the upper layer (7, 13) are transported by transportation means (11), preferably a transportation chain.

12. Method according to one of the preceding claims, **characterized in**, the sticks (3) of the lollipops (12) are released from the transportation means (11) after their insertion into the recess (4') or after their detachment from the lower- and/or upper- layer (7, 13).

13. Method according to one of the preceding claims, **characterized in, that** a second item (5) is inserted into the recess (4').

14. Method according to claim 13, **characterized in, that** the second item (5) is inserted into the recess (4') prior to the lollipop head (2).

15. Packaging machine (6), which packages a lollipop (12) between a low and an upper layer (7, 13), with a sealing station (18), which seal the two layers (7, 13) together, **characterized in, that** it comprises deep drawing means (9) which form a recess (4') into at least one of the layers (7, 13), cutting means (15) which detach the packaged lollipops (1) and transportation means (11), which transport the lollipop towards the sealing station (18) and insert the lollipop head into the recess (4') prior to and/or in the sealing station.
